# EUROPEAN PATENT APPLICATION

(11) **EP 4 697 390 A2**
(43) Date of publication of application: **18.02.2026**
(21) Application number: 25189119.8
(22) Date of filing: 11.07.2025
(51) Int. Cl.: H01M 4/04, H01M 10/04, H01M 10/052, H01M 10/058, H01M 10/44

(54) **MANUFACTURING METHOD OF LITHIUM SECONDARY BATTERY**

(30) Priority: 13.08.2024 KR 20240108569
(71) Applicant: SAMSUNG SDI CO., LTD., Yongin-si, Gyeonggi-do 17084 (KR)
(72) Inventor: KIM, Jinmun, 17084 Yongin-si (KR); LEE, Chanhyung, 17084 Yongin-si (KR); CHOI, Huiju, 17084 Yongin-si (KR); LEE, Byeonggwan, 17084 Yongin-si (KR); KO, Eunjoo, 17084 Yongin-si (KR)
(74) Representative: Marks & Clerk LLP

(57) **Abstract**

The present disclosure relates to a manufacturing method of a secondary battery. A manufacturing method of a secondary battery according to one or more embodiments includes formation-charging an assembled secondary battery cell so that SOC of the assembled secondary battery cell is about 30% or more and about 60% or less, aging the formation-charged secondary battery cell, discharging the secondary battery cell in which the aging is completed, and shipment charging the secondary battery cell so that the SOC of the discharged secondary battery cell becomes about 20% or more and about 30% or less.

## Description

### BACKGROUND

### 1. Field

One or more embodiments of the present disclosure relate to a manufacturing method of a secondary battery.

### 2. Description of the Related Art

In general, a primary battery is not rechargeable, but a secondary battery can be charged and discharged repeatedly. Small-capacity secondary batteries are usually (typically) used in portable, small-sized electronic devices such as smartphones, feature phones, notebook computers, digital cameras, camcorders, and/or the like. In contrast, large-capacity secondary batteries are extensively used as power sources for driving motors in hybrid or electric vehicles and/or as power storage devices for energy storage systems (ESS) or power walls. The secondary battery may include an electrode assembly having a positive electrode and a negative electrode, a case accommodating the electrode assembly, and an electrode terminal connected to the electrode assembly.

A lithium secondary battery generally undergoes an activation process after an electrode assembly thereof is assembled in a battery case together with an electrolyte. The activation process stabilizes the structure of the assembled battery and makes it usable (e.g., ready for use). This activation process may include a charging and discharging process to provide electrical characteristics to a secondary battery cell of the lithium secondary battery, an aging process to expose the secondary battery cell to certain temperature and humidity conditions for a certain period of time, and a degassing process to release (discharge) gases generated inside the secondary battery cell.

The information disclosed in this Background section is intended to enhance understanding of the described technology. It may contain information that does not constitute prior art for a person of ordinary skill in the art.

### SUMMARY

One or more aspects of embodiments of the present disclosure are directed toward a manufacturing method of a secondary battery that aims to reduce (is capable of reducing) the time desired or required for an activation process (of the secondary battery) and/or aims to improve (is capable of improving) the quality of the secondary battery.

Technical aspects (solutions) of the present disclosure are not limited to the above-mentioned technical aspects. Additional aspects will be set forth in part in the description which follows and, in part, will be apparent from the description, or may be learned by practice of the presented embodiments. For example, unmentioned technical aspects (solutions) could be understood from the following description by those having ordinary skill in the technical field to which the present disclosure pertains.

According to one or more embodiments of the present disclosure, a manufacturing method of a secondary battery includes formation-charging an assembled secondary battery cell so that a state of charge (SOC) of the assembled secondary battery cell is about 30% or more and about 60% or less, aging the formation-charged secondary battery cell, discharging the secondary battery cell in which the aging is completed, and shipment charging the secondary battery cell so that the SOC of the discharged secondary battery cell is (e.g., becomes) about 20% or more and about 30% or less.

In one or more embodiments, the manufacturing method of the secondary battery may further include, before the formation-charging, forming a solid electrolyte interphase (SEI) film by repeatedly charging and discharging the secondary battery cell.

The forming may include charging the secondary battery cell to SOC of about 20% or less, discharging the secondary battery cell to SOC of about 0%, and repeating the charging to SOC of about 20% or less and the discharging the secondary battery cell to SOC of about 0% at least once.

In one or more embodiments, in the forming, the number of repetitions of the charging to SOC of about 20% or less and the discharging to SOC of about 0% may be 3 times or less. For example, the forming process may involve repeating the cycle of charging to about 20% or less and discharging to about 0% up to three times.

The formation-charging may be performed in an environment where an ambient temperature of the secondary battery cell is about 30 °C or higher and about 60 °C or lower.

The formation-charging may include performing a degassing process at least once.

The forming may be performed in an environment where the ambient temperature of the secondary battery cell is about 30 °C or higher and about 60 °C or lower.

The forming may include performing a degassing process at least once.

According to one or more embodiments of the present disclosure, it may reduce a time desired or required for an activation process of a secondary battery and improve the quality of the secondary battery.

Effects that may be obtained from embodiments of the present disclosure are not limited to only the above described effects, and other effects which are not described herein will become apparent to those skilled in the art from the following description. At least some of the above and other features of the invention are set out in the claims.

### BRIEF DESCRIPTION OF THE DRAWINGS

The accompanying drawings illustrate example embodiments of the present disclosure and, together with the foregoing disclosure, serve to provide further understanding of the present disclosure, but the present disclosure is not to be construed as being limited to the drawings. In addition, the above and other aspects, features, and advantages of certain embodiments of the present disclosure will be more apparent from the following description taken in conjunction with the accompanying drawings.

FIG. 1 is a flowchart schematically illustrating a manufacturing method of a secondary battery according to one or more embodiments of the present disclosure.

FIG. 2 illustrates an example of a change in SOC of a secondary battery while each step (e.g., act or task) of FIG. 1 is performed according to one or more embodiments of the present disclosure.

### DETAILED DESCRIPTION

Hereinafter, example embodiments of the present disclosure will be described in more detail with reference to the accompanying drawings. Prior to making the description, the terms or words used in the disclosure and claims of the present disclosure should not be interpreted using typical or dictionary limited meanings, and are constructed as meanings and concepts conforming to the present disclosure based on the principle that a person having ordinary skill of the art may appropriately or suitably define the concepts of the terms to explain the disclosure in the best manner. Accordingly, it is to be understood that the detailed description, which will be disclosed along with the accompanying drawings, is intended to describe one or more embodiments of the disclosure and is not intended to represent all technical ideas and aspects of the present disclosure, and therefore it should be understood that one or more suitable equivalents and modifications may exist which may replace one or more embodiments described at the time of the application. It should be further understood that the term "comprise(s)" or "include(s)" or "has/have" and/or "comprising" or "including" or "having," if (e.g., when) used in this disclosure, specify the presence of stated features, numbers, steps, operations, elements, and/or components, but do not preclude the presence or addition of one or more other features, numbers, steps, operations, elements, components, and/or groups thereof. In addition, if (e.g., when) describing embodiments of the present disclosure, "may" and "may be" may refer to "one or more embodiments of the present disclosure."

In addition, for ease of understanding of the present disclosure, the accompanying drawings may not be drawn to real scale, but the dimensions of some components may be exaggerated. In addition, the same reference numbers may be assigned to the same components in different embodiments of the disclosure.

In the disclosure, stating that two objects of comparison are "the same" refers to that they are "substantially the same."

Therefore, "substantially identical" may include a deviation that is considered low in the art-for example, a deviation of less than 5%. Additionally, uniformity of a parameter in a certain region may refer to uniformity from an average perspective.

Although terms "first," "second," and/or the like are used to explain one or more suitable constituent elements, the constituent elements are not limited to such terms. These terms are only used to distinguish one constituent element from another constituent element, and unless explicitly stated to the contrary, the second constituent element may be referred to as the first constituent element.

Throughout the disclosure, unless otherwise stated, each component may be singular or plural. For example, as used herein, the singular forms "a," "an," and "the" are intended to include the plural forms as well, unless the context clearly indicates otherwise.

It should also be understood that if (e.g., when) a first element or layer is referred to as being present "on" or "beneath" a second element or layer, the first element may be arranged directly on or beneath the second element or may be arranged indirectly on or beneath the second element with a third element or layer being arranged between the first and second elements or layers. In contrast, if (e.g., when) an element is referred to as being "directly on" or "directly beneath" another element, there are no intervening elements present therebetween.

It should be noted that if (e.g., when) it is stated in the disclosure that one component is "connected," "coupled," or "joined" to another component, a third component may be "connected," "coupled," and "joined" between the first and second components, although the first component may be directly connected, coupled, or joined to the second component. When it is stated that an element is "electrically coupled" to another element, the element may be "directly coupled" to the other element or "coupled" to the other element through a third element.

Reference to "A and/or B" or "A/B" throughout the specification, refers to A, B, or A and B, unless specifically stated to the contrary. For example, "and/or" includes all or any combination of the plurality of listed items. Reference to "C to D" refers to that it is greater than or equal to C and less than or equal to D, unless otherwise specified.

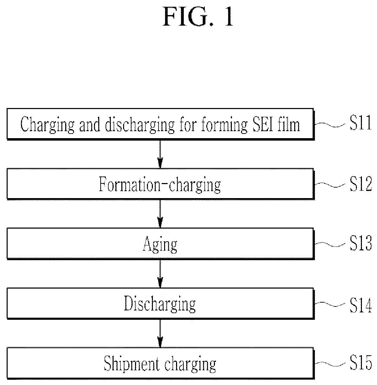

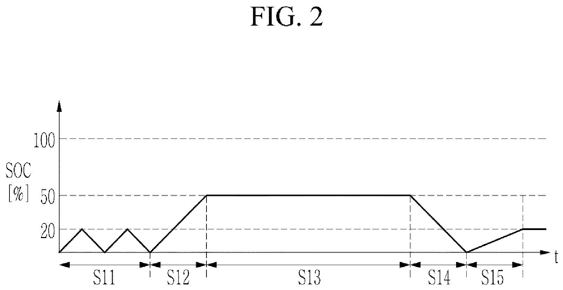

FIG. 1 is a flow chart schematically illustrating a manufacturing method of a secondary battery according to one or more embodiments of the present disclosure, and discloses an activation process during a manufacturing process of a secondary battery. Additionally, FIG. 2 illustrates an example of a change in SOC of a secondary battery while each step (e.g., act or task) of FIG. 1 is performed according to one or more embodiments of the present disclosure.

The activation process is performed after an assembly process of a secondary battery cell, which may be included in a secondary battery or be a secondary battery), and is performed to activate the electric energy of an assembled secondary battery cell. According to one or more embodiments of the present disclosure, the assembly process may include housing an electrode assembly in a battery case, injecting an electrolyte into the battery case, sealing the battery case, and/or the like. In the present disclosure, the term "assembled secondary battery cell" as used herein refers to a secondary battery cell that is assembled in an assembly process without performing its activation process.

Referring to FIG. 1, in a manufacturing method of a secondary battery according to one or more embodiments, an activation process may include a charging and discharging for forming a solid electrolyte interphase (SEI) film (S11), formation-charging (S12), aging (S13), discharging (S14), and shipment charging (S15).

The charging and discharging for forming the SEI film (S11) is a step (e.g., act or task) for forming an SEI film on a negative electrode surface of an assembled secondary battery cell. In the charging and discharging for forming the SEI film (S11), the secondary battery cell may be charged and discharged in the range of state of charge (SOC) of about 0% to SOC of about 20%. Referring to FIG. 2 as an example, in the charging and discharging for forming the SEI film (S11), the secondary battery cell may be charged to SOC of about 20% and then discharged to SOC of about 0%.

In the charging and discharging for forming the SEI film (S11), charging and discharging of the secondary battery cell may be repeated. Referring to FIG. 2 as an example, in one or more embodiments, in the charging and discharging for forming the SEI film (S11), the charging and discharging of the secondary battery cell may be repeated twice. In the charging and discharging for forming the SEI film (S11), the forming of the SEI film may be strengthened by repeatedly charging and discharging in an SOC section (for example, a section less than or equal to SOC of 20%) where the electrolyte of the secondary battery cell undergoes a decomposition reaction to form the SEI film. For example, in one or more embodiments, a substantially uniform SEI film may be formed on the negative electrode surface of the secondary battery cell through the charging and discharging for forming the SEI film (S11).

In the charging and discharging for forming the SEI film (S11), the number of repetitions of charging and discharging may be set to 3 or less. If (e.g., when) the number of charging and discharging increases to more than 4, the SEI film thickness increases significantly, which may degrade the quality of the secondary battery cell.

When the charging and discharging for forming the SEI film (S11) is completed, the formation-charging (S12) may be performed. The formation-charging (S12) is a step (e.g., act or task) to activate the electrode plates of the secondary battery cell on which the SEI film is uniformly (e.g., substantially uniformly) formed through step (e.g., act or task) S11, thereby improving the electrolyte impregnation property in the aging (S13). If the secondary battery cell is charged to a full-charge state before the aging (S13), a large amount of side reactions in the electrode plates may occur, which may degrade the shipping quality of the secondary battery cell. Therefore, in the formation-charging (S12), charging may be terminated before the secondary battery cell reaches full charge to suppress or reduce side reactions of the electrode plates. In the formation-charging (S12), the charging termination SOC of the secondary battery cell is set to a value greater than or equal to about 30% and less than or equal to about 60%. The negative electrode of the secondary battery cell shows a large volume change in the range of SOC of about 30% to SOC of about 60%. Therefore, if (e.g., when) aging is performed after charging the secondary battery cell when the SOC of the secondary battery cell is about 30% or more and about 60% or less, the impregnation property of the electrolyte is improved and the side reaction of the electrode plate may be suppressed or reduced. Referring to FIG. 2 as an example, in one or more embodiments, in the formation-charging (S12), the secondary battery cell is charged until the SOC of the secondary battery cell reaches about 50%, and charging may be terminated when the SOC of the secondary battery cell reaches about 50%.

As described above, if the charging termination SOC in the formation-charging (S12) is set to about 60% or less, the time desired or required for the formation-charging (S12) may be reduced. Additionally, the time desired or required for the discharging (S14) to fully discharge the secondary battery cell charged after the aging (S13) may be also reduced. Accordingly, the time desired or required for the activation process may be reduced.

In one or more embodiments, the charging and discharging for forming the SEI film (S11) and the formation-charging (S12) may be performed in a high-temperature environment where the ambient temperature of the secondary battery cell is about 30 °C or higher and about 60 °C or lower. In one or more embodiments, the charging and discharging for forming the SEI film (S11) and the formation-charging (S12) may be performed while the secondary battery cell is pressurized to a set or predetermined pressure.

In one or more embodiments, the charging and discharging for forming the SEI film (S11) and the formation-charging (S12) may be performed concurrently (e.g., simultaneously) with a degassing process. For example, the degassing process may be performed at least once while the charging and discharging for forming the SEI film (S11) is in progress and while the formation-charging (S12) is in progress. The degassing process is a process of removing gases inside a secondary battery cell and may be performed in one or more suitable ways. For example, in one or more embodiments, the degassing process may be performed by accommodating the secondary battery cell in a chamber, wherein a hole (e.g., opening) for gas discharging is formed in the battery case, and creating a vacuum inside the chamber. The secondary battery cell housed in the chamber under vacuum may discharge gases generated inside through one or more holes (e.g., one or more openings). For example, the degassing process may occur at least once during the charging and discharging for SEI film formation and during the formation-charging. The degassing process, which removes gases inside the secondary battery cell, can be performed in various ways. For instance, the degassing may involve placing the battery cell having an exhaust hole in a chamber for gas discharge and creating a vacuum inside the chamber, allowing gases to escape through the hole.

If the degassing process is performed concurrently (e.g., simultaneously) with the charging and discharging for forming the SEI film (S11) and the formation-charging (S12), the time of the activation process may be prevented (or reduced) from increasing due to the degassing process. For example, by combining these steps, the time required for activation is reduced as the degassing does not add extra time to process.

Once the formation-charging (S12) is completed, the aging (S13) may proceed. The aging (S13) is a step (e.g., act or task) to stabilize the secondary battery cell by ensuring sufficient impregnation of the electrolyte. The aging (S13) may be performed by leaving the secondary battery cell charged through the formation-charging (S12) in an environment where the temperature and the humidity are kept constant for a set or predetermined time.

Once the aging (S13) is completed, the discharging (S14) may be performed to discharge the secondary battery cell to a discharged state, for example a fully discharged state.

When the secondary battery cell is in a (fully) discharged state, the shipment charging (S15) for shipping the secondary battery cell may be performed. The shipment charging (S15) is a step (e.g., act or task) in which the secondary battery cell is charged to meet the desired or required shipment specifications before shipment of the secondary battery cell.

If the secondary battery cell is charged to a full charge state after the aging (S13), a large amount of side reactions may occur in the electrode plates, which may degrade the quality of the secondary battery cell. Accordingly, side reactions of the electrode plates may be suppressed or reduced by preventing or reducing the secondary battery cell from being fully charged before the secondary battery cell is shipped after the aging (S13) is completed. For this reason, in the shipment charging (S15), charging of the secondary battery cell may be terminated before the charging state of the secondary battery cell reaches a full charge state. In the shipment charging (S15), the charging termination SOC of the secondary battery cell is determined according to the customer's desired or required specifications and may be set to a value of about 20% or more and about 30% or less-that is, the shipment charging (S15) is performed so that the SOC of the secondary battery cell at the time of shipment is about 20% or more and about 30% or less.

Referring to FIG. 2 as an example, in one or more embodiments, in the shipment charging (S15), the secondary battery cell is charged until the SOC of the secondary battery cell reaches about 20%, and charging may be terminated when the SOC of the secondary battery cell reaches about 20%.

Secondary battery cells that have completed shipment charging may be shipped after undergoing a quality inspection process. During the quality inspection process, inspections may be performed on the secondary battery cell to check for electrolyte impregnation, occurrence of side reactions, and abnormalities in assembled components.

Below, the side reaction suppression effect according to the examples is described with reference to Table 1.

**Table 1**

| | Comparative Example 1 | Comparative Example 2 | Comparative Example 3 | Comparative Example 4 | Comparative Example 5 | Example 1 | Example 2 |
|---|---|---|---|---|---|---|---|
| Formation-charging SOC | 90% | 60% | 40% | 100% | 90% | 60% | 40% |
| Fully charged or not | ○ | ○ | ○ | × | × | × | × |
| Side reaction area ratio | 0.5% | 0.13% | 0.07% | 1.2% | 0.08% | 0% | 0% |

In Table 1, Comparative Example 1 shows the side reaction area ratio (a ratio of the side reaction area to the total area of the electrode plate) when the secondary battery cell is fully charged before shipment of the secondary battery cell after aging is performed with the secondary battery cell charged to SOC of 90% in the formation-charging step (e.g., act or task). Comparative Example 2 shows the side reaction area ratio when the secondary battery cell is fully charged before shipment of the secondary battery cell after aging is performed with the secondary battery cell charged to SOC of 60% in the formation-charging step (e.g., act or task). Comparative Example 3 shows the side reaction area ratio when the secondary battery cell is fully charged before shipment of the secondary battery cell after aging is performed with the secondary battery cell charged to SOC of 40% in the formation-charging step (e.g., act or task). Comparative Example 4 shows the side reaction area ratio in the case where aging is performed while the secondary battery cell is charged to SOC of 100% in the formation-charging step (e.g., act or task) and the secondary battery cell is not fully charged until the secondary battery cell is shipped. Comparative Example 5 shows the side reaction area ratio in the case where aging is performed while the secondary battery cell is charged to SOC of 90% in the formation-charging step (e.g., act or task) and the secondary battery cell is not fully charged until the secondary battery cell is shipped. Example 1 shows the side reaction area ratio in the case where aging is performed while the secondary battery cell is charged to SOC of 60% in the formation-charging step (e.g., act or task) and the secondary battery cell is not fully charged until the secondary battery cell is shipped. Example 2 shows the side reaction area ratio in the case where aging is performed while the secondary battery cell is charged to SOC of 40% in the formation-charging step (e.g., act or task) and the secondary battery cell is not fully charged until the secondary battery cell is shipped. Referring to Table 1, it can be seen that the side reaction area ratio of the electrode plate increases as the SOC of the secondary battery charged for the aging step (e.g., act or task) increases. In addition, it can be seen that when a secondary battery is fully charged before shipment of the secondary battery cell after aging, the side reaction area ratio increases compared to when the secondary battery is not fully charged.

Therefore, in one or more embodiments, the aging of the secondary battery cell is performed while the SOC of the secondary battery cell is about 60% or less, and the secondary battery cell is not fully charged even after the aging, thereby minimizing or reducing the occurrence of side reactions in the secondary battery cell before shipment.

In the context of the present disclosure and unless otherwise defined, the terms "use," "using," and "used" may be considered synonymous with the terms "utilize," "utilizing," and "utilized," respectively.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing apparatus/system, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While one or more embodiments of the present disclosure have been described in more detail, it is to be understood that the disclosure is not limited to the disclosed embodiments, but on the contrary, is intended to cover one or more suitable modifications and equivalent arrangements included within the scope of the appended claims.

## Claims

1. A method of manufacturing a secondary battery, comprising:
formation-charging an assembled secondary battery cell so that a state of charge, SOC, of the assembled secondary battery cell is 30% or more and 60% or less;
aging the formation-charged secondary battery cell;
discharging the secondary battery cell in which the aging is completed; and
shipment charging the secondary battery cell so that the SOC of the discharged secondary battery cell is 20% or more and 30% or less.

2. The manufacturing method as claimed in claim 1, further comprising:
before the formation-charging, forming a solid electrolyte interphase film by repeatedly charging and discharging the secondary battery cell.

3. The manufacturing method as claimed in claim 2, wherein the forming comprises:
charging the secondary battery cell to SOC of 20% or less;
discharging the secondary battery cell to SOC of 0%; and
repeating the charging to SOC of 20% or less and the discharging to SOC of 0% at least once.

4. The manufacturing method as claimed in claim 3, wherein
in the forming, the number of repetitions of the charging to SOC of 20% or less and the discharging to SOC of 0% is 3 times or less.

5. The manufacturing method as claimed in claim 2, 3, or 4, wherein
the forming is performed in an environment where an ambient temperature of the secondary battery cell is 30 °C or higher and 60 °C or lower.

6. The manufacturing method as claimed in any one of claims 2 to 5, wherein the forming comprises performing a degassing process at least once.

7. The manufacturing method as claimed in any one of claims 1 to 6, wherein the formation-charging is performed in an environment where an ambient temperature of the secondary battery cell is 30 °C or higher and 60 °C or lower.

8. The manufacturing method as claimed in any one of claims 1 to 7, wherein the formation-charging comprises performing a degassing process at least once.

9. The manufacturing method as claimed in any one of claims 1 to 8, wherein
the secondary battery cell is not fully charged before the secondary battery cell is shipped.

10. A manufacturing system comprising:
means for formation-charging an assembled secondary battery cell so that a state of charge (SOC) of the assembled secondary battery cell is 30% or more and 60% or less;
means for aging the formation-charged secondary battery cell;
means for discharging the secondary battery cell in which the aging is completed; and
means for shipment charging the secondary battery cell so that the SOC of the discharged secondary battery cell is 20% or more and 30% or less,
wherein the manufacturing system is a system of manufacturing a secondary battery.

11. A secondary battery produced by the manufacturing method as claimed in any one of claims 1 to 10.
